# EUROPEAN PATENT SPECIFICATION

(11) **EP 2 935 730 B1**
(45) Date of publication and mention of the grant of the patent: **29.11.2017**
(21) Application number: 13864240.0
(22) Date of filing: 20.12.2013
(51) Int. Cl.: E05B 47/00, B25F 5/00, E05B 49/00, E05B 73/00, G07C 9/00

(54) **METHOD, NODE, COMPUTER PROGRAM AND POWER TOOL DEVICE, FOR ENABLING LOCKING AND UNLOCKING OF POWER TOOL**
VERFAHREN, KNOTEN, COMPUTERPROGRAMM UND ELEKTROWERKZEUGVORRICHTUNG ZUM VERRIEGELN UND ENTRIEGELN EINES MASCHINENWERKZEUGS
PROCÉDÉ, NOEUD, PROGRAMME INFORMATIQUE ET SYSTÈME D'OUTIL À COMMANDE MÉCANIQUE PERMETTANT DE VERROUILLER ET DE DÉVERROUILLER UN OUTIL À COMMANDE MÉCANIQUE

(30) Priority: 21.12.2012 SE 1251511; 21.12.2012 US 201261740712 P
(43) Date of publication of application: 28.10.2015
(60) Divisional application: 17195325.0
(73) Proprietor: Nida Tech Sweden AB, 216 23 Malmö (SE)
(72) Inventor: DACKEFJORD, Håkan, S-125 51 Älvsjö (SE)
(74) Representative: Bergenstråhle Group AB
(86) International application number: PCT/SE2013/051595
(87) International publication number: WO 2014/098760

(56) References cited:
- EP-A1- 1 945 411
- WO-A1-2006/021047
- CA-A1- 2 283 552
- JP-A- 2007 141 094
- US-A1- 2011 289 123
- US-A1- 2012 234 058
- US-A1- 2013 176 107
- US-B1- 6 469 615

## Description

### Technical field

The present disclosure relates generally to methods, nodes, computer programs and a power tool for enabling unlocking and locking of the power tool for prevention of unauthorized use.

### Background

Entrepreneurs and construction companies are using various machines and tools on construction sites. This ranges from the self-employed carpenter performing a renovation of a cottage all the way to the large construction company building entire new hospitals, districts, highways, bridges and other major projects. The workers doing the construction uses all kind of tools from pencils and knifes all the way to excavators and cranes. When it comes to power tools, also frequently used by the construction workers, they may involve a significant value in combination with a compact format. Such tools may include electric driven tools, fuel/gasoline driven tools, pneumatic driven tools, hydraulic driven tools, not limiting to similar powered tools. Examples of power tools are: screwdrivers, bolt gun, nail gun, impact drill, angle grinder, cutter, saw, reciprocating saw, not limiting to other types of tools. Obviously a crane may represent a large capital value, but it is rather unpractical for the simple thief or the regular criminal organization to steal a crane. However, the power tool is easy to carry away and may represent a significant value on a market, or may be used for other criminal activities. This is a vast problem for construction companies, which power tools is being stolen or just disappears from construction sites. The lost tools costs money to replace drives insurance costs, and delays planned work.

Another problem is where owner of tools, for example tool rental companies, is to get rental returns of tools in time or according to an agreement.

Another problem, of a rather practical character, which yet may be troublesome, may be on a large construction site, to find tools being spread out over a large area or space.

EP1945411 A1 describes a system comprising inside the tool, an electronic module for locking/unlocking the tool in order to block or authorize its use inside a control station or similar. The tool's locking/unlocking module is designed to switch it from the locked state to the unlocked state.

CA2283552A1 describes an anti-theft system for securing a removable battery to a power tool. The system employs a tamper-proof retainer to ensure that the retail display of a combined power tool and its associated battery can be displayed as a single unit without fear of theft of the battery. This may be achieved by the tamper-proof retainer securing a battery release latch against its release position hence securing the battery to the tool in a manner preventing the removal of the battery by a potential thief. The tamper-proof retainer either prevents removal of the battery from the power tool, as removal of the tamper-proof retainer is impossible, or, if it is destroyed by a thief, then it permanently secures the battery to the power tool.

US20120234058A1 describes a wireless access control system including a remote access device. A plugin device communicates with the remote access device and a lock controls the ability to lock and unlock a door in which the lock is disposed. The plugin device determines a distance between the remote access device and the lock and causes the lock to communicate with the remote access device when the remote access device is at a distance less than or equal to a predetermined distance from the lock to enable the lock to be unlocked.US20110289123A1 describes a method for controlling and recording the security of an enclosure. A mobile electronic control device such as an electronic key, is used to access or otherwise control the operations of a field device, such as an appliance, power tool, shipping container, and the like. In a control event in which the mobile control device interacts with the field device via wired or wireless communications, the control device obtains the current location and the field device ID. The communications between the mobile control device and the field device may be secured with encryption. The location information is used by the mobile control device to determine whether the field device should be accessed or enabled. Alternatively, the location information may be stored separately in a location sensing device, and the control event data recorded by the key and the location information recorded by the location sensing device are later combined when they are downloaded into a management system for auditing.

US6469615B1 describes an operating control device can be use on equipment such as hand tools, electronics or fuel pumps. An input device enables the input of user access codes and a readout panel monitors the equipment status. A control member is in communication with the input device, readout panel, power source, driver member and activation member to prevent operation of the equipment by requiring entry of a user code. The control device can include a programmable timer to communicate with the control member to enable the power to flow from the power source to the driver member for a predetermined period of time. A clock can track time and activate and deactivate the timer. The communication can be through electrical wires that can be encased in a solid material to make the control member and wires inaccessible. When used directly on a fuel pump, the control member prevents fuel from reaching the engine without the input of a proper user code. Alternatively, the control device can be a fuel line shutoff valve to prevent fuel from traveling along the line. A solenoid can be used in the shutoff valve to prevent flow of fuel from the gas tank to the driver.

WO2006021047A1 describes an access control system for two door access points that are selectively accessed by a plurality of users. The system includes access tokens for respective users having memory for containing a digital certificate and a token certificate change list. Each token is responsive to an interrogation signal for generating a token signal derived from the certificate. A computer network contains information indicative of the certificates for the system, and allows system to provide a central that is indicative of changes that are required to one or more of those certificates. A connected access reader is disposed adjacent to access point and communicates with network for maintaining a first local that is merged in real time with the central. Reader generates an interrogation signal and is responsive to the corresponding token signal for determining if access point is to be pulsed to the unlocked configuration.

US2013176107A1 describes a wireless access control system including a remote access device and an electronic lock. The electronic lock communicates with the remote access device. The electronic lock controls the ability to lock and unlock a door in which the electronic lock is disposed. The electronic lock determines when the remote access device is at a distance less than or equal to a predetermined distance from the lock to enable the lock to be unlocked.

JP2007141094A describes a function for preventing unauthorized use which can be used by anyone when lending equipment to a third person. The solution comprises a touch electrode, connecting electrode and a switching means.

### Summary

It is an object of the invention to address at least some of the problems and issues outlined above. It is possible to achieve these objects and others by using a method and an apparatus as defined in the attached independent claims.

According to one aspect, a method is provided in a power tool for enabling unlocking and locking of the power tool for prevention of unauthorized use, the method comprising: receiving an unlock message to a control unit, the message including an instruction to unlock the tool, unlocking the power tool according to the instruction by the control unit via an actuator unit, counting an authorization time period from reception of the first message to the control unit by a counter, wherein when the counted authorization time period exceed a predetermined threshold, locking the power tool by the control unit via the actuator unit, thereby enabling prevention of unauthorized use of the power tool by remote unlocking and locking.

According to another aspect, a method is provided in a tool control node for enabling unlocking and locking of a tool for prevention of unauthorized use, the method comprising transmitting an unlock message to the tool, the message including an instruction to unlock the tool, counting an authorization time period from transmission of the unlock message to the tool, wherein when the counted authorization time period exceed a predetermined threshold, transmitting of a lock message including an instruction to lock the tool, thereby enabling prevention of unauthorized use of the tool by remote unlocking and locking.

According to another aspect, a power tool is provided adopted to enable unlocking and locking of the power tool for prevention of unauthorized use, the power tool adopted to receive an unlock message to a control unit, the message including an instruction to unlock the tool, unlock the power tool according to the instruction by the control unit via an actuator unit, count an authorization time period from reception of the first message to the control unit by a counter, wherein when the counted authorization time period exceed a predetermined threshold, lock the power tool by the control unit via the actuator unit, thereby enabling prevention of unauthorized use of the power tool by remote unlocking and locking.

The above methods, tool control node and power tool may be configured and implemented according to different optional embodiments. In one possible embodiment, the actuator unit is at least one of electrical switch, mechanical lock and semiconductor based switch. In another possible embodiment when a second unlock message is received before the predetermined threshold is reached, the counter is restarted, such that the power tool remains unlocked. In another possible embodiment the unlock message includes a first key, wherein, the first key is required by the control unit for authorization of the message. In another possible embodiment the drive unit requires at least one of the first key or a second key from the control unit, for enabling of the drive unit. In another possible embodiment a lock message is received by the control unit, the lock message including an instruction to lock the tool, wherein the tool is locked by the control unit via the actuator unit. In another possible embodiment a position message including an alert signal is received by the control unit, the position message including an instruction to repeatedly transmit a response signal as a response to the alert signal, thereby enabling positioning of the tool. In another possible embodiment the communication with the tool is encrypted. In another possible embodiment the tool has a physical tamper protection.

In another embodiment a power tool control unit adopted to enable unlocking and locking of a tool for prevention of unauthorized use is adopted to:
- transmit an unlock message to the tool, the message including an instruction to unlock the tool,
- determine the position of the tool and check if said tool is within a predetermined area,
- if the tool leave said predetermined area transmit a lock message including an instruction to lock the tool, thereby enabling prevention of unauthorized use of the tool.

The power tool control unit can further be configured to sound and transmit an alarm if said tool leaves the predetermined area.

Further possible features and benefits of this solution will become apparent from the detailed description below.

### Brief description of drawings

The solution will now be described in more detail by means of exemplary embodiments and with reference to the accompanying drawings, in which:
Fig. 1 is a block diagram illustrating the solution.
Fig 2 is a block diagram illustrating a power tool.
Fig. 3 is a flow chart illustrating a procedure in a power tool, according to possible embodiments.
Fig 4. is a signaling diagram illustrating an example of a delegation when the solution is used, according to further possible embodiments.
Fig. 5 is a communication scenario illustrating the solution, according to further possible embodiments.
Fig. 6 is a flow chart illustrating a procedure in a tool control node, according to possible embodiments.
Fig. 7A-C are illustrations of positioning scenarios for a power tool.
Fig. 8 illustrates examples of computer implementations.
Fig. 9 shows an illustration of relocation of a presence node.

### Detailed description

Briefly described, a solution is provided to avoid theft of power tools and other capital intensive machineries related to construction sites. By having a lock on a power tool, which default is locked, it may be less attractive for theft. A lock which is remotely controlled. Only when a user is authorized by the owner of the tool, the tool is unlocked. The tool may be unlocked for a specific period of time. The tool may further be unlocked within a specific geographical or a specific volume. An unlock message may be transmitted from a tool control node, which instructs the power tool to be unlocked. The power tool is than unlocked and fully usable for a certain time period, before the time period has passed, a new unlock message must be received by the power tool, otherwise it will be locked for further usage. So if the tool does not receive any unlock message or, if the tool is outside a specified area, it will automatically be locked and unusable. An owner of a tool may for some reason want to revoke an authorization from a user to use the tool, for example if an invoice is not paid for. Than may the tool owner transmit a lock message to the tool, such it becomes unusable. The tool owner may delegate a right to transmit unlock and lock messages to an intermediate, a presence node. An example may be the tool rental company delegating to a site manager. Such right may also be revoked.

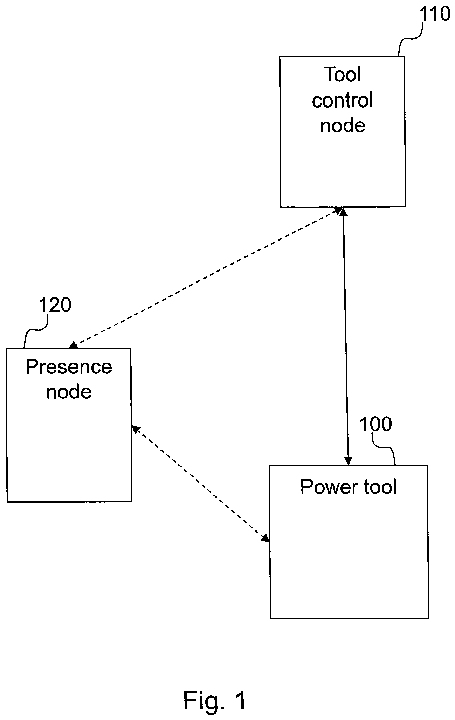

Now the solution will be described in more detail. Fig. 1 shows a block diagram with a power tool 100, a tool control node 110 for controlling power tools 100 and a presence node 120 for handling of delegated controlling of power tools 100.

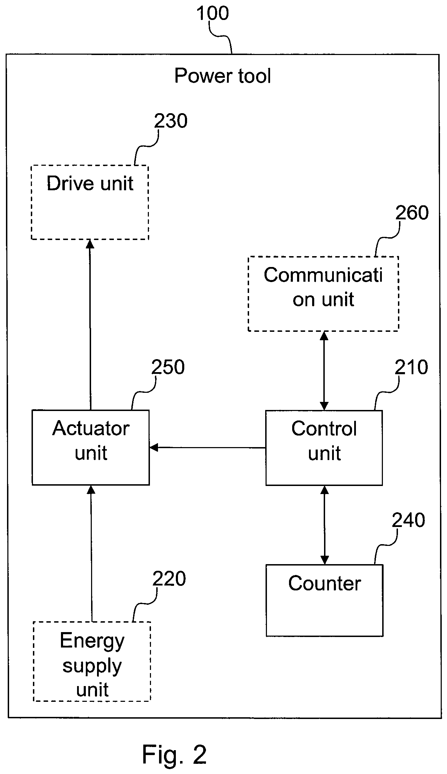

Fig. 2 shows a block diagram of the tool 100. The tool includes a control unit 210 for controlling unlocking and locking of the power tool 100 and other actions. The power tool 100 further includes a counter 240 for counting of time. The power tool 100 further includes an actuator unit 250 for unlocking and locking of the power tool 100. The power tool may also include an energy supply unit 220, a drive unit 230 and a communication unit 260 for reception and transmission of messages.

Power tool may also be denoted "device", appliances, powered machine, not limiting to other similar suitable terms. Appliances may include washer, dryer, dishwasher, heat pump, stove, oven, microwave, not limiting to other appliances used in a home or office. Tool control node may also be denoted "remote node" not limiting to other similar suitable terms. Presence node may also be denoted "mobile node" not limiting to other similar suitable terms. A few examples of the tool control node 110 may be, a server in a communications network, a virtual server in a communications network, a mobile phone or an application installed on a mobile phone, a PDA (Personal Digital assistant) or an application installed on a PDA, not limiting to other similar nodes. A few examples of a presence node 120 may be a mobile phone or an application installed on a mobile phone, a PDA (Personal Digital assistant) or an application installed on a PDA, a gateway, access switch, access router, WLAN access point (Wireless Local Area Network) not limiting to other similar nodes. The term "unlock" may also be denoted "enable", and the term "lock" may also be denoted "disabled".

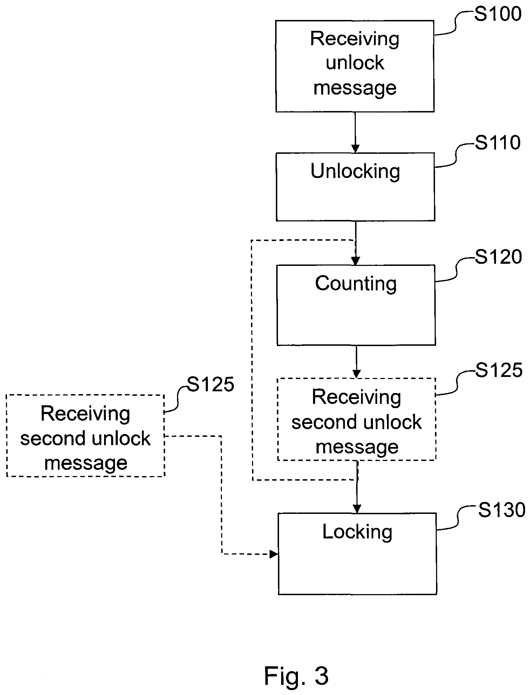

Fig. 3 shows a method in a power tool 100 for enabling unlocking and locking of the power tool for prevention of unauthorized use. The method comprises receiving **S100** an unlock message to a control unit 210, the message including an instruction to unlock the tool 100. The method further comprises unlocking **S110** the power tool 100 according to the instruction by the control unit 210 via an actuator unit 250. The method further comprises counting **S120** an authorization time period from reception of the first message to the control unit 210 by a counter 240, wherein when the counted authorization time period exceed a predetermined threshold, the power tool 100 is locked **S130** by the control unit (210) via the actuator unit (250), thereby enabling prevention of unauthorized use of the power tool (100) by remote unlocking and locking.

The unlock message may come from a tool control node 110. The message may be carried via wireless radio communication, for example such as WiFi according to IEEE 802.11 (Institute of Electrical and Electronics Engineers), RFID (Radio-frequency identification), Bluetooth, not limiting to other similar communication methods. Protocols used for carrying the message may be Ethernet, TCP/UDP/IP (Transmission Control Protocol/User Datagram Protocol/Internet Protocol). Further examples of protocols which may be used are; SMTP (Simple Mail Transfer Protocol), SMS/MMS (Short Message Service / Multimedia Messaging Service), HTTP/HTTPS (Hypertext Transfer Protocol/Secure), SIP/SIPS (Session Initiation Protocol/Secure), not limiting to other suitable protocols for messages or communication with a power tool 100. The message with the unlock instruction may also include other information, such as a time stamp, or the length of the authorization time period, not limiting to other information. The authorization time period may be a time period during which the power tool 100 may be unlocked and prepared for normal operation. During the authorization time period, the power tool 100 may be outside radio contact with for example the tool control node 110. The counter 240 counts the authorization time period, such when the authorization time period exceeds the predetermined threshold the power tool 100 is locked. When the power tool 100 is locked it may not be possible to use for normal operation. The threshold may be adjusted, for example by manually setting a different value, or by reception of a different value via the unlock message or the lock message.

In an example of the solution, the actuator unit 250 may be at least one of electrical switch, mechanical lock and semiconductor based switch. Depending of the propulsion of the power tool 100 different kinds of locks may be more or less suitable. A combination of an electrical switch, mechanical lock and semiconductor based switch may be used for locking the power tool 100. In an example of the solution, when a second unlock message is received before the predetermined threshold is reached, the counter 240 may be restarted, such that the power tool 100 remains unlocked. By this action, the power tool 100 may be used in normal operation without interruption. Unless the counter 240 is restarted by for example a second unlock message, the power tool 100 may be locked from normal operation. In an example of the solution, the unlock message may include a first key, wherein the first key may be required by the control unit 210 for authorization of the unlock message. By usage of the first key, it may be possible to authorize the unlock message or any other messages received by the tool 100. Thereby may the power tool 100 be enabled to protect itself from receiving or taking any actions based on unauthorized messages.

In an example of the solution, the drive unit 230 may require at least one of the first key or a second key from the control unit 110, for enabling of the drive unit 230. If the power tool for example has been stolen, and the control unit is replaced with a modified control unit, the power tool may then be prevented from unauthorized usage, because the drive unit may expect a correct key before propulsion of the power tool 100. In an example of the solution, a lock message may be received by the control unit 210, where the lock message may include an instruction to lock the tool 100, wherein the tool 100 may be locked by the control unit 210 via the actuator unit 250.

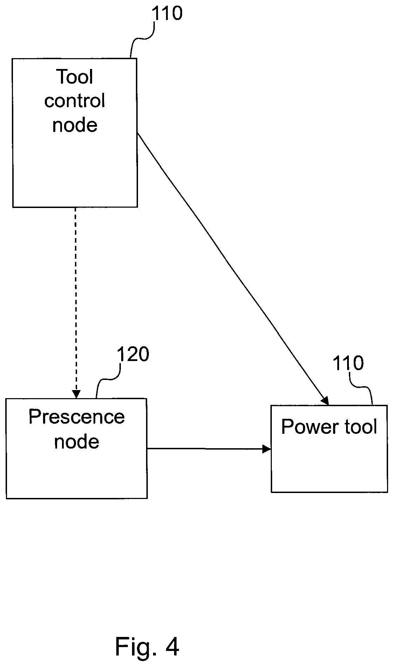

In an example of the solution, a position message including an alert signal is received by the control unit (210), the position message including an instruction to repeatedly transmit a response signal as a response to the alert signal, thereby enabling positioning of the tool (100). When a power tool 100 is missing, because it has been lost/misplaced or stolen, it may then be possible to position the tool. By the power tool 100 transmitting the response signal, it may then be possible to determine a distance to the power tool 100. It may also be possible to determine a direction to the power tool 100. It may also be possible to determine a position of the power tool 100. In an example of the solution showed in Fig. 4, the power tool 100 may be arranged to receive an alert signal from the control node 110.The alert signal may include an identification of the power tool 100, alerting the power tool 100 by matching the received identification with a preprogrammed identification of the power tool 100, transmitting a response signal to the alert signal, including the identification of the power tool 100 matching the received identification, thereby enabling determination of the position of the power tool 100. In an example, the power tool 100 is adapted to repeatedly transmit the response to the alert signal. Hereby, a risk that for instance a control node 110 does not receive the response due to poor signal strength/connectivity resulting e.g. from the position of the power tool 100 or the presence node 120 may be reduced. Another advantage may be, if the power tool 100 changes locations, it may be possible to determine the new position.

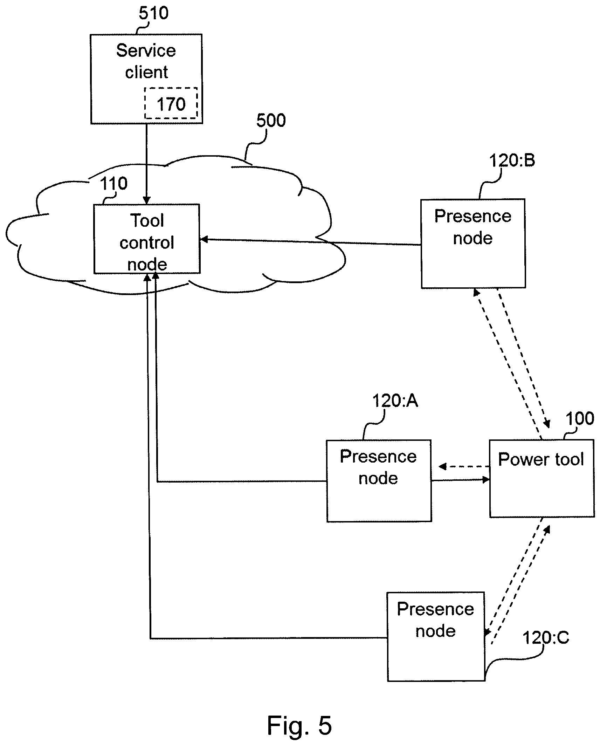

Fig. 5, shows an overview of the solution from a positioning perspective, comprising a plurality of presence nodes 120. The solution may further comprise a tool control node 110 comprising for instance a presence node 120. The control node 110 is arranged to transmit a positioning request message, including an identification of the power tool 100, to a plurality of presence nodes 110. Such plurality of presence nodes may be a closed user group of users which have agreed to use a specific service, a random group of presence nodes 120 located in the vicinity of the control node 110, an open user community which users may subscribe to, an ad hoc network, or a meshed network, or similar. In an example of the solution, the control node 110 may be arranged to calculate the position of the power tool 100 using any of triangulation, multilateration or trilateration upon receiving responses to the position request message from a plurality of presence nodes 120. According to an embodiment, the control node 110 is hosted by a presence node 120, i.e. the control node 110 may itself be used to the determined the position of the power tool 100.

In an example of the solution, the communication with the power tool 100 may be encrypted. By encryption of the communication between power tool 100 and other nodes, unauthorized access to the power tool 100 may be prevented, as well as man-in-the-middle types of attacks. In an example of the solution, the tool 100 may have a physical tamper protection. A physical tamer protection may prevent or reduce the risk of unauthorized physical access to the power tool 100. The physical tamer protection may also prevent or reduce the risk of unauthorized physical access to key components of the power tool 100.

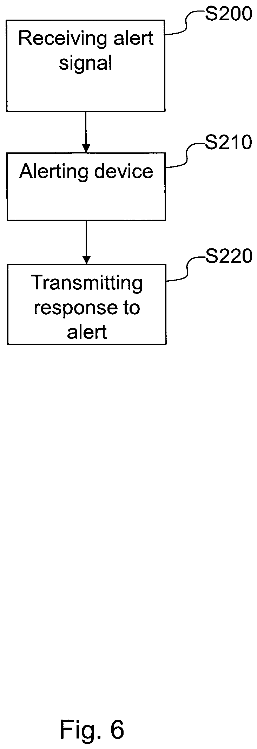

Fig. 6 shows a flowchart of a method in a tool control node 110 for enabling unlocking and locking of a tool for prevention of unauthorized use. The method comprises transmitting an unlock message to the tool 100, where the message includes an instruction to unlock the tool 100. The method further includes counting an authorization time period from transmission of the unlock message to the tool 100, wherein when the counted authorization time period exceed a predetermined threshold, the method further comprises transmitting of a lock message including an instruction to lock the tool (100), thereby enabling prevention of unauthorized use of the tool 100 by remote unlocking and locking.

In an example of the solution, when a use time period end may be beyond the authorization time period end, a second unlock message may be transmitted to the tool 100 before the predetermined authorization time period threshold is reached, such that the power tool 100 remains unlocked. The authorization time period may for example be 24 hours, i.e. a power tool 100 may be used for up to 24 hours, and at the end of the 24 hours the power tool 100 may be locked from normal operation, unless a second unlock message may be transmitted from the tool control node 110 to the power tool 100. The authorization period may be in a range from seconds up to days or weeks, depending on practical implementation.

The use time period may be a time period of an intended use period on a construction site, for example a month. The use period may be in a range from single hours up to months or even years. A use time period may be possible to interrupt, or change to a shorter or longer period. An example is where a customer of a rented power tool 100, may want to extend the rental period, or when a customer not has paid invoices, then the use time period may be extended, or interrupted. In the invoicing case, an unlock message may be transmitted from the tool control node 110 to the power tool 100, when the invoice is paid, such that the rental customer then may continue to use the power tool 100 under normal operation.

In an example of the solution, for example illustrated in Fig. 4, a position message including an alert signal may be transmitted to the power tool 100, thereby enabling positioning of the tool (100).

In an example of the solution, a delegated authorization to transmit unlock and lock messages to a specified power tool (100) message including the instruction to unlock the tool (100) may be transmitted to a presence node (120). Fig. 5 shows the tool control node 110, which may transmit the delegation to one of or all of the presence nodes 120:1, 120:B, 120:C. Fig. 5 also illustrated how the presence nodes 120:1, 120:B, 120:C may cooperate for positioning of a missing power tool 100. In an example of the solution, an annulation of the delegated authorization may be transmitted to the presence node (120).

The power tool 100, for example illustrated in Fig. 2, is adopted to enable unlocking and locking of the power tool 100 for prevention of unauthorized use. The power tool 100 is adopted to receive an unlock message to the control unit 210, where the message includes an instruction to unlock the tool 100. The power tool 100 is further adopted to unlock the power tool 100 according to the instruction by the control unit 210 via the actuator unit 250. The power tool 100 is further adopted to count an authorization time period from reception of the first message to the control unit 210 by the counter 240, wherein when the counted authorization time period exceeds a predetermined threshold, the power tool 100 is locked by the control unit 210 via the actuator unit 250, thereby enabling prevention of unauthorized use of the power tool 100 by remote unlocking and locking.

Fig. 1 and Fig. 5 et. al. shows the tool control node 110 adopted to enable unlocking and locking of a tool for prevention of unauthorized use. The tool control node 110 is adopted to transmit the unlock message to the tool 100, the message including an instruction to unlock the tool 100. The tool control node 110 is further adopted count the authorization time period from transmission of the unlock message to the tool 100, wherein when the counted authorization time period exceeds a predetermined threshold, tool control node 110 is adopted to transmit the lock message including an instruction to lock the tool 100, thereby enabling prevention of unauthorized use of the tool 100 by remote unlocking and locking.

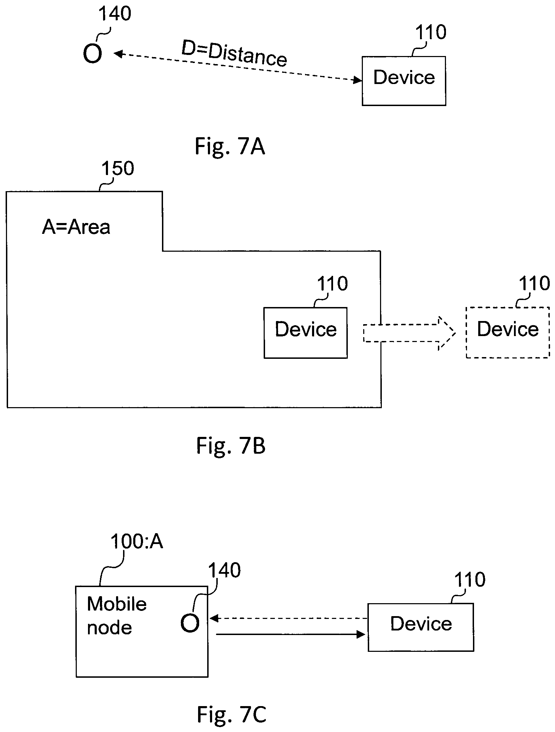

Fig. 7A shows a block diagram over a situation wherein a power tool 100 is at a certain distance from a geographical point 840. The tool control node 110 may be arranged to determine whether the position of the power tool 100 is within a predefined distance D from the geographical point 840, or if the power tool 100 is outside the predetermined distance. According to one embodiment shown in 7B, the tool control node 110 determines the position by comparing the position of the power tool 100 with a set geographical point 840 and calculates the distance between them. According to another embodiment as is further disclosed in Fig. 7C, the geographical point 840 is defined by the location of a presence node 110. The position of the presence node 110 may be dynamic.

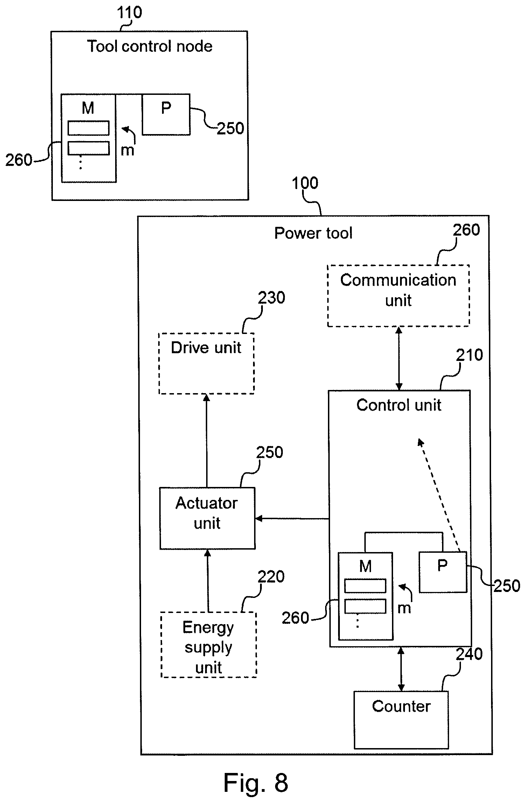

Now looking at Fig. 8. The power tool 100 and the tool control node 110 described above may be implemented, by means of program modules of a respective computer program comprising code means which, when run by processor "P" 250 causes the power tool 100 and the tool control node 110 to perform the above-described actions. The processor P 250 may comprise a single Central Processing Unit (CPU), or could comprise two or more processing units. For example, the processor P 250 may include general purpose microprocessors, instruction set processors and/or related chips sets and/or special purpose microprocessors such as Application Specific Integrated Circuits (ASICs). The processor P 250 may also comprise a storage for caching purposes.

Each computer program may be carried by computer program products "M" 260 in the power tool 100 and the tool control node 110, shown in Fig. 1, 2, 4, 5, et al, in the form of memories having a computer readable medium and being connected to the processor P. Each computer program product M 260 or memory thus comprises a computer readable medium on which the computer program is stored e.g. in the form of computer program modules "m". For example, the memories M 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the power tool 100 and the tool control node 110.

In an example embodiment of the solution the technology could be used for authorization in relation to other purposes than theft prevention. Some power tools require special skills from the operator and should therefore not be handled by any user, one example is a woodwork-class for educational purpose where some machines in the class room might be locked to a presence node 110 possessed by the teacher, hence preventing students from using machinery while the teacher is not in the vicinity. Another example is for use in DIY (do it yourself) tools for home users where the technology could be adapted as, for example, a child look, allowing parents to store the power tools in areas were children potentially could locate them.

In the following a few examples of positioning techniques is described. The examples are for illustration of how a power tool 100 may be determined in direction, distance, and/or position. These examples are not limiting other techniques to be used.

Closest presence node 120. The most basic of the location determination techniques, is to identify the location based on the presence node 120 that is closest to the power tool 100. This may be done by looking at the association between the power tool 100 and the presence node 120 or by measuring signal strength.

Calculation of the approximately distance between the power tool 100 and one or more presence nodes 120. This technique is called lateration. The distance may be calculated based on signal strength or timing information.

Received Signal Strength Indication (RSSI) - Signal strength is a measurement on how strongly a transmitted signal is being received at a particular distance from the transmitter. The signal strength varies with distance, obstacles and interfering radio frequency signals. Multi path fading also affect the signal strength. In Wi-Fi networks, the signal strength is defined as Received Signal Strength Indication (RSSI). RSSI may be measured by the presence node 120 Link Quality Indicator (LQI) is a metric of the current quality of the received signal. The LQI may provide an estimate of how easily a received signal may be demodulated by accumulating the magnitude of the error between ideal constellations and the received signal over the 64 symbols immediately following the sync word.

Time Difference of Arrival (TDoA, also time of flight) - Distance may be calculated based on signal propagation time. Radio waves travel at a known speed through the wireless medium. Thus, if the time of transmission and time of signal arrival are known, the distance may be computed. Time Difference of Arrival (TDoA) is an example of such a technique. In TDoA, the position may be computed based on the difference in time when the signal arrives at different presence nodes 120.

Angle (AoA) - Instead of timing information, angles may be used to calculate the position. At each access point, the wireless signal arrives at a certain angle. By using geometric relationships between the angles of arrival at two presence nodes 120, the estimated location may be computed.

Triangulation and Trilateration, - When the location is estimated based on angle measurements from three or more presence nodes 120 the method is referred to as triangulation. The signal strength or timing information from several access points may also be used together to form coverage circles and intersection points. If the distance from at least three different presence nodes 120 may be calculated, this technique is known as trilateration. With the use of algorithms, the power tool 100 most likely position may be pointed based on the information from the different presence nodes 120. The more presence nodes 120 that contribute in computing the location, the more likely it is to get an accurate approximation.

Location Patterning - None of the above position determination techniques take into account signal propagation characteristics, such as reflection, attenuation and multi-path fading. However, with the location patterning technique, such characteristics of the actual wireless medium considered in the position computation. This location patterning technique may need calibration, in order to record how the wireless signals propagate throughout the environment. During this calibration phase, RF characteristics and real world data regarding how obstacles affect the propagation may be collected and pre-stored in a database. This information may then be compared with real-time information from the presence nodes 120 to achieve a more accurate position approximation.

Multiple Range Estimation Locator MREL (Multiple Range Estimation Location) used with Andrews Location Measurement Units (LMUs). MREL may use the transmission time and the time of arrival of the signal to determine a circular range ring, where the power tool 100 may be located. The location may then estimated by the best intersection of the multiple range-rings. Conversely, TDoA calculates the difference in the time of arrival of the mobile signal between multiple pairs of receivers. The differences in arrival time determine hyperbolic curves between receivers of where the power tool 100 may be. The location may then be estimated by the best intersection of the multiple hyperbolic curves.

In an embodiment, distance or position may be determined by usage of at least one of: association or signal strength, timing information, Received Signal Strength Indication (RSSI), Link Quality Indicator (LQI), Time Difference of Arrival/Time-of-Arrival (TDoA/TOA), Angle (AoA), Triangulation and/or Trilateration, Location Patterning, Multiple Range Estimation Locator MREL (Multiple Range Estimation Location), in combination with anyone else of the mentioned solutions.

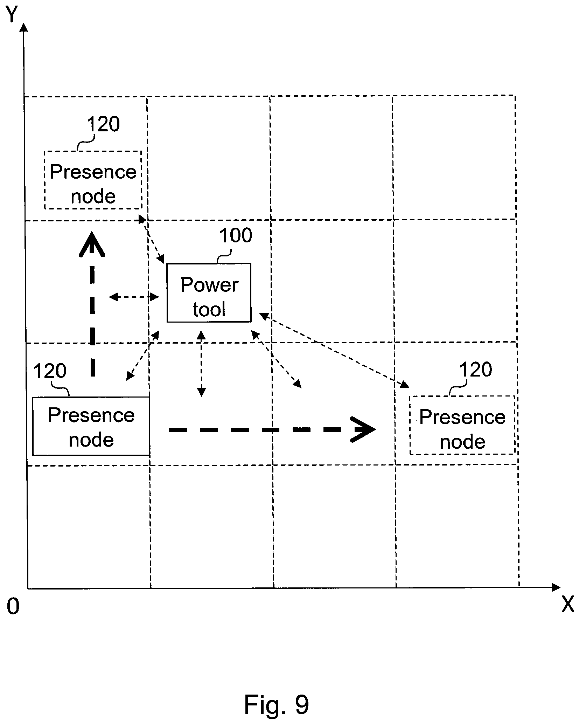

Fig. 9 illustrates an embodiment of the solution. A presence node 120 may be relocated to different positions. The different positions may be represented in a coordinate system. An example is where the start point of the presence node 120 is determined as coordinate "0". When the presence node 120 is relocated and at each point where a signal is received from the power tool 100, the new coordinate is determined. There by it may be possible to by usage of one presence node 120 simulate a plurality of presence nodes 120, where the simulated plurality of presence nodes 120 may better determine a position of a power tool 100, than a single presence node 120. A presence node 120 may determine its coordinate by use of GPS, etc. The presence node 120 may also determine a relative coordinate by usage of for example one of gyro, magnetic compass, accelerometer, tilt sensor, gyroscope, altimeter, not limiting to other type of sensors for measuring movements and/or relative positions.

In an embodiment, not shown in Fig. 9, the coordinate system may be a three dimensional coordinate system, such when a presence node 120 is relocated and during the relocation determines three dimensional coordinates for each signal received from the power tool 100.

A user of a presence node 120 may by moving around, simulate a group of users where each user has a presence node 120, thereby it may be possible to better determine a position of a power tool 100 than with a single presence node 120 stationary at one point.

In an embodiment, the time difference of arrival is measured by the power tool 100, instead of the presence node 120. An illustrative example is where at least one presence node 120 transmits a signal, such an alert signal or any other signal, such that the power tool 100 may measure the time of flight from the presence node 120 to the power tool 100. The power tool 100 may transmit the response to the alert signal, or any other signal, the response including the identification of the power tool 100 and also the measured transmission time between the presence node 120 and the power tool 100. The power tool 100 may additionally, based on the measured transmission time between the presence node 120 and the power tool 100, determine the distance between the presence node 120 and the power tool 100. The response transmitted by the power tool 100 may then include: identification of the power tool 100, measured transmission time between the presence node 120 and the power tool 100, and the determined distance between the presence node 120 and the power tool 100. In an embodiment, the time may be measured with an accuracy down to microseconds. In another embodiment, the time may be measured with an accuracy down to nanoseconds.

There may be advantages with the power tool 100 measuring the time of arrival, time difference of arrival or time of flight, instead of the presence node 120. An advantage may be that the power tool 100 may be easier to adopt for measuring the signals time of flight, than adopting the presence node 120 for measuring the time. Another advantage may be that the power tool 100 may be adapted to measure time with a better accuracy. Another advantage may be that by performing measurement in the device, more presence nodes 120 may participate in positioning a power tool 100 with a better accuracy then only presence node 120 with support for measuring the time. Another advantage with measuring time in the power tool 100 is that a plurality of additional sources for determination of the distance between a mobile terminal and a power tool 100 may enable avoidance of signal reflections and other disturbances.

In a situation where there is a plurality of presence nodes 120, the power tool 100 may transmit a response to each presence node 120, from which the power tool 100 has received a valid identification. The response may include any of: the identification, measured transmission time, and determined distance. The plurality of presence nodes 120 may better determine the position of the power tool 100.

The presence nodes can further be utilized for positioning of tools through Time of Arrival. Such positioning is not limited to pear-to-pear networks and can thereby be any form of network communication, comprising other network communication units such as for example access points.

For the determination of the position, wireless communication networks, such as for IEEE 802.11x, Bluetooth, ZigBee, or any other wireless communication network can be used.

It is further understood that different frequencies could be used. For example could frequencies from 400 MHz up to 5,5 GHz preferably be used in different embodiments of the invention.

While the solution has been described with reference to specific exemplary embodiments, the description is generally only intended to illustrate the inventive concept and should not be taken as limiting the scope of the solution. For example, the terms "power tool", "appliances", "presence node" and "tool control node" have been used throughout this description, although any other corresponding nodes, functions, and/or parameters could also be used having the features and characteristics described here. The solution is defined by the appended claims.

## Claims

1. A method in a power tool (100) for enabling unlocking and locking of the power tool for prevention of unauthorized use of the power tool, the method comprising:
- receiving (S100) an unlock message to a control unit (210), the message including an instruction to unlock the power tool (100),
- unlocking (S110) the power tool (100) according to the instruction by the control unit (210) via an actuator unit (250), thereby enabling prevention of unauthorized use of the power tool (100) by remote unlocking,
- counting (S120) an authorization time period from reception of a first unlock message to the control unit (210) by a counter (230),
- when a second unlock message is received before a predetermined threshold of the authorization time period is reached, restarting the counter (240) such that the power tool (100) remains unlocked,
- receiving a position message including an alert signal received by the control unit (210), the position message including an instruction to repeatedly transmit a response signal as a response to the alert signal, thereby enabling positioning of the tool (100), and
- when the predetermined threshold of the counted authorization time period is reached, or the power tool (100) leaves a predetermined area, locking (S130) the power tool (100) according to the instruction by the control unit (210) via the actuator unit (250).

2. The method according to claim 1, wherein:
- the unlock message includes a first key, wherein
- the first key is required by the control unit (210) for authorization of the unlock message.

3. The method according to claim 2, wherein:
- a drive unit (230) requires at least one of the first key or a second key from the control unit (110), for enabling of the drive unit (230).

4. The method according to any of claims 1-3, comprising the steps of:
- receiving a lock message by the control unit (210), the lock message including an instruction to lock the tool (100), wherein
- the tool (100) is locked by the control unit (210) via the actuator unit (250).

5. The method according to any of claims 1-4, comprising the steps of:
- receiving an alert message including an alert signal by the control unit (210); wherein
- said message triggers the control unit (210) to transmit a signal requesting response signals from presence nodes nearby;
- receiving response signals to the control unit (210) from presence nodes (120:A, 120:B, 120:C) nearby and thereby enabling positioning of the tool (100).

6. A method in a tool control node (110) for enabling unlocking and locking of a tool for prevention of unauthorized use of the tool, the method comprising:
- transmitting an unlock message to the tool (100), the unlock message including an instruction to unlock the tool (100),
- counting an authorization time period from transmission of the unlock message to the tool (100),
- when a use time period end is beyond the authorization time period end, transmitting a second unlock message to the tool (100) before the predetermined authorization time period threshold is reached, such that the power tool (100) remains unlocked,
- transmitting a position message including an alert signal to the power tool (100), thereby enabling positioning of the tool (100),
- when the counted authorization time period exceed a predetermined threshold,
- transmitting a lock message including an instruction to lock the tool (100), thereby enabling prevention of unauthorized use of the tool (100) by remote unlocking and locking, and
- if the tool (100) leave a predetermined area transmitting a lock message including an instruction to lock the tool (100), thereby enabling prevention of unauthorized use of the tool (100).

7. The method according to claim 6, comprising the step of:
- transmitting a delegated authorization to transmit unlock and lock messages to a specified power tool (100) including the instruction to unlock the tool (100) to a presence node (120).

8. The method according to claim 7, comprising the step of:
- transmitting an annulation of the delegated authorization to the presence node (120).

9. A power tool (100) arranged to enable unlocking and locking of said power tool (100) for prevention of unauthorized use, the power tool (100) comprising means arranged to:
- receive a message to a control unit (210), the message including an instruction to unlock or lock the tool (100),
- locking or unlocking the power tool (100) according to the instruction by the control unit (210) an actuator unit (250), thereby enabling prevention of unauthorized use of the power tool (100) by remote unlocking and locking,
- wherein, the control unit (210) is arranged to receive a position message including an alert signal, the position message including an instruction to repeatedly transmit a response signal as a response to the alert signal, thereby enabling positioning of the tool (100), and
- wherein, if the tool (100) leave a predetermined area, the tool (100) is adapted to be locked according to the instruction by the control unit (210) via the actuator unit (250).

10. The power tool (100) according to claim 9, comprising a counter adapted to:
- count an authorization time period from reception of the first message to the control unit (210) wherein
- when the counted authorization time period exceeds a predetermined threshold,
- the power tool (100) is adapted to be locked according to the instruction by the control unit (210) via the actuator unit (250).

11. The power tool (100) according to any one of claims 9-10, adapted to:
- when an unlock message is received before the predetermined threshold is reached,
- the counter (230) is adapted to be restarted, such that the power tool (100) remains unlocked.

12. The power tool (100) according to any of claims 9-11, wherein:
- the unlock message includes a first key, wherein,
- the first key is required by the control unit (210) for authorization of the message.

13. The power tool (100) according to claim 12, wherein:
- a drive unit (230) is arranged to require at least one of the first key or a second key from the control unit (110), for enabling of the drive unit (230).

14. The power tool (100) according to any of claims 9-13, wherein:
- the control unit (210) is arranged to receive a lock message including an instruction to lock the tool (100), wherein
- the actuator unit (250) is arranged to be locked by the control unit (210) via the actuator unit (250).

15. The power tool (100) according to any of claims 9-14, wherein:
- the control unit (210) is arranged to receive an alert message including an alert signal;
- said alert message triggers the control unit (210) to transmit a signal requesting response signals from presence nodes nearby; and
- the control unit (210) is arranged to receive response signals from presence nodes (120:A, 120:B, 120:C) nearby and thereby enabling positioning of the tool (100).

16. A tool control node (110) adapted to enable unlocking and locking of a tool for prevention of unauthorized use of the tool (100), the node (110) comprising means adapted to:
- transmit an unlock message to the tool (100), the message including an instruction to unlock the tool (100),
- count an authorization time period from transmission of the unlock message to the tool (100), wherein when the counted authorization time period exceeds a predetermined threshold,
- transmit a lock message including an instruction to lock the tool (100), thereby enabling prevention of unauthorized use of the tool (100) by remote unlocking and locking, and
- the tool control node (110) is adapted to perform the method according to any claims 6-8.

17. A computer program, comprising computer readable code means, which when run in any one of a power tool (100) and a tool control node (110) is arranged to enable unlocking and locking of the tool (100) and cause the tool (100) to perform the corresponding method according to any of the claims 1 to 5 and the control node (110) to perform the corresponding method according to claim 6-8.

18. A computer program product, comprising a computer readable medium and a computer program according to claim 17, wherein the computer program is stored on the computer readable medium.

## Patentansprüche

1. Verfahren in einem kraftgetriebenen Werkzeug (100) zur Ermöglichung von Entriegelung und Verriegelung des kraftgetriebenen Werkzeugs zur Verhinderung unautorisierter Benutzung des kraftgetriebenen Werkzeugs, wobei das Verfahren umfasst:
- Empfangen (S100) einer Entriegelungsmeldung zu einer Steuereinheit (210), wobei die Meldung eine Anweisung zum Entriegeln des kraftgetriebenen Werkzeugs (100) beinhaltet,
- Entriegeln (S110) des kraftgetriebenen Werkzeugs (100) gemäß der Anweisung von der Steuereinheit (210) mittels einer Betätigungseinheit (250), wodurch die Verhinderung unautorisierter Benutzung des kraftgetriebenen Werkzeugs (100) durch Fernentriegelung ermöglicht wird,
- Zählen (S120) eines Autorisierungszeitraums ab dem Empfang einer ersten Entriegelungsmeldung zu der Steuereinheit (210) durch einen Zähler (230),
- wenn eine zweite Entriegelungsmeldung empfangen wird, bevor ein vorgegebener Grenzwert des Autorisierungszeitraums erreicht ist, Wiederaufstarten des Zählers (240), sodass das kraftgetriebene Werkzeug (100) entriegelt bleibt,
- Empfangen einer Positionsmeldung, die ein Alarmsignal beinhaltet, das von der Steuereinheit (210) empfangen wurde, wobei die Positionsmeldung eine Anweisung beinhaltet, in Reaktion auf das Alarmsignal wiederholt ein Antwortsignal zu übertragen, wodurch eine Positionsbestimmung des Werkzeugs (100) ermöglicht wird, und
- wenn der vorgegebene Grenzwert des gezählten Autorisierungszeitraums erreicht ist oder das kraftgetriebene Werkzeug (100) einen vorgegebenen Bereich verlässt, Verriegeln (S130) des kraftgetriebenen Werkzeugs (100) gemäß der Anweisung von der Steuereinheit (210) mittels der Betätigungseinheit (250).

2. Verfahren nach Anspruch 1, wobei:
- die Entriegelungsmeldung einen ersten Schlüssel beinhaltet, wobei
- der erste Schlüssel von der Steuereinheit (210) zur Autorisierung der Entriegelungsmeldung benötigt wird.

3. Verfahren nach Anspruch 2, wobei:
- eine Antriebseinheit (230) mindestens eines des ersten Schlüssels oder eines zweiten Schlüssels von der Steuereinheit (110) zur Aktivierung der Antriebseinheit (230) benötigt.

4. Verfahren nach einem der Ansprüche 1 bis 3, umfassend die folgenden Schritte:
- Empfangen einer Verriegelungsmeldung durch die Steuereinheit (210), wobei die Verriegelungsmeldung eine Anweisung zur Verriegelung des Werkzeugs (100) beinhaltet, wobei
- das Werkzeug (100) von der Steuereinheit (210) mittels der Betätigungseinheit (250) verriegelt wird.

5. Verfahren nach einem der Ansprüche 1 bis 4, umfassend die folgenden Schritte:
- Empfangen einer Alarmmeldung, die ein Alarmsignal beinhaltet, durch die Steuereinheit (210); wobei
- die Meldung die Steuereinheit (210) veranlasst, ein Signal zu übertragen, das Antwortsignale von nahegelegenen Präsenzknoten anfordert;
- Empfangen von Antwortsignalen zu der Steuereinheit (210) von nahegelegenen Präsenzknoten (120:A, 120:B, 120:C) und dadurch Ermöglichen einer Positionsbestimmung des Werkzeugs (100).

6. Verfahren in einem Werkzeugsteuerknoten (110) zur Ermöglichung von Entriegelung und Verriegelung eines Werkzeugs zur Verhinderung unautorisierter Benutzung des Werkzeugs, wobei das Verfahren umfasst:
- Übertragen einer Entriegelungsmeldung zu dem Werkzeug (100), wobei die Entriegelungsmeldung eine Anweisung zum Entriegeln des Werkzeugs (100) beinhaltet,
- Zählen eines Autorisierungszeitraums ab der Übertragung der Entriegelungsmeldung zu dem Werkzeug (100),
- wenn ein Benutzungszeitraumende über das Autorisierungszeitraumende hinausgeht, Übertragen einer zweiten Entriegelungsmeldung zu dem Werkzeug (100), bevor der vorgegebene Autorisierungszeitraumgrenzwert erreicht ist, sodass das kraftgetriebene Werkzeug (100) entriegelt bleibt,
- Übertragen einer Positionsmeldung, die ein Alarmsignal beinhaltet, zu dem kraftgetriebenen Werkzeug (100), wodurch eine Positionsbestimmung des Werkzeugs (100) ermöglicht wird,
- wenn der gezählte Autorisierungszeitraum einen vorgegebenen Grenzwert überschreitet,
- Übertragen einer Verriegelungsmeldung, die eine Anweisung beinhaltet, das Werkzeug (100) zu verriegeln, wodurch, durch Fernentriegelung und -verriegelung, die Verhinderung unautorisierter Benutzung des Werkzeugs (100) ermöglicht wird, und
- wenn das Werkzeug (100) einen vorgegebenen Bereich verlässt, Übertragen einer Verriegelungsmeldung, die eine Anweisung zur Verriegelung des Werkzeugs (100) beinhaltet, wodurch die Verhinderung unautorisierter Benutzung des Werkzeugs (100) ermöglicht wird.

7. Verfahren nach Anspruch 6, umfassend den Schritt des:
- Übertragens einer delegierten Autorisierung zur Übertragung von Entriegelungs- und Verriegelungsmeldungen zu einem spezifizierten kraftgetriebenen Werkzeug (100), einschließlich der Anweisung an einen Präsenzknoten (120), das Werkzeug (100) zu entriegeln.

8. Verfahren nach Anspruch 7, umfassend den Schritt des:
- Übertragens einer Annullierung der delegierten Autorisierung zu dem Präsenzknoten (120).

9. Kraftgetriebenes Werkzeug (100), das dazu eingerichtet ist, das Entriegeln und Verriegeln des kraftgetriebenen Werkzeugs (100) zur Verhinderung unautorisierter Benutzung zu ermöglichen, wobei das kraftgetriebene Werkzeug (100) Mittel umfasst, die eingerichtet sind zum:
- Empfangen einer Meldung zu einer Steuereinheit (210), wobei die Meldung eine Anweisung zum Entriegeln oder Verriegeln des Werkzeugs (100) beinhaltet,
- Verriegeln oder Entriegeln des kraftgetriebenen Werkzeugs (100) gemäß der Anweisung von der Steuereinheit (210) mittels einer Betätigungseinheit (250), wodurch die Verhinderung unautorisierter Benutzung des kraftgetriebenen Werkzeugs (100) durch Fernentriegelung und -verriegelung ermöglicht wird,
- wobei die Steuereinheit (210) dazu eingerichtet ist, eine Positionsmeldung, die ein Alarmsignal beinhaltet, zu empfangen, wobei die Positionsmeldung eine Anweisung beinhaltet, wiederholt ein Antwortsignal als Reaktion auf das Alarmsignal zu übertragen, wodurch eine Positionsbestimmung des Werkzeugs (100) ermöglicht wird, und
- wobei, wenn das Werkzeug (100) einen vorgegebenen Bereich verlässt, das Werkzeug (100) dazu eingerichtet ist, gemäß der Anweisung von der Steuereinheit (210) mittels der Betätigungseinheit (250) verriegelt zu werden.

10. Kraftgetriebenes Werkzeug (100) nach Anspruch 9, einen Zähler umfassend, der eingerichtet ist zum:
- Zählen eines Autorisierungszeitraums ab dem Empfang der ersten Meldung bis zu der Steuereinheit (210), wobei,
- wenn der gezählte Autorisierungszeitraum einen vorgegebenen Grenzwert überschreitet,
- das kraftgetriebene Werkzeug (100) dazu eingerichtet ist, gemäß der Anweisung von der Steuereinheit (210) mittels der Betätigungseinheit (250) verriegelt zu werden.

11. Kraftgetriebenes Werkzeug (100) nach einem der Ansprüche 9 bis 10, das dazu eingerichtet ist, dass:
- wenn eine Entriegelungsmeldung empfangen wird, bevor der vorgegebene Grenzwert erreicht ist,
- der Zähler (230) dazu eingerichtet ist, wieder gestartet zu werden, sodass das kraftgetriebene Werkzeug (100) entriegelt bleibt.

12. Kraftgetriebenes Werkzeug (100) nach einem der Ansprüche 9 bis 11, wobei:
- die Entriegelungsmeldung einen ersten Schlüssel beinhaltet, wobei
- der erste Schlüssel von der Steuereinheit (210) zur Autorisierung der Meldung benötigt wird.

13. Kraftgetriebenes Werkzeug (100) nach Anspruch 12, wobei:
- eine Antriebseinheit (230) dazu eingerichtet ist, mindestens einen des ersten Schlüssels oder eines zweiten Schlüssels von der Steuereinheit (110) zur Aktivierung der Antriebseinheit (230) zu benötigen.

14. Kraftgetriebenes Werkzeug (100) nach einem der Ansprüche 9 bis 13, wobei:
- die Steuereinheit (210) dazu eingerichtet ist, eine Verriegelungsmeldung zu empfangen, die eine Anweisung zur Verriegelung des Werkzeugs (100) beinhaltet, wobei
- die Betätigungseinheit (250) dazu eingerichtet ist, von der Steuereinheit (210) mittels der Betätigungseinheit (250) verriegelt zu werden.

15. Kraftgetriebenes Werkzeug (100) nach einem der Ansprüche 9 bis 14, wobei:
- die Steuereinheit (210) dazu eingerichtet ist, eine Alarmmeldung zu empfangen, die ein Alarmsignal beinhaltet;
- die Alarmmeldung die Steuereinheit (210) veranlasst, ein Signal zu übertragen, das Antwortsignale von nahegelegenen Präsenzknoten anfordert; und
- die Steuereinheit (210) dazu eingerichtet ist, Antwortsignale von nahegelegenen Präsenzknoten (120:A, 120:B, 120:C) zu empfangen und dadurch eine Positionsbestimmung des Werkzeugs (100) zu ermöglichen.

16. Werkzeugsteuerknoten (110), der dazu eingerichtet ist, das Entriegeln und Verriegeln eines Werkzeugs zur Verhinderung unautorisierter Benutzung des Werkzeugs (100) zu ermöglichen, wobei der Knoten (110) Mittel umfasst, die eingerichtet sind zum:
- Übertragen einer Entriegelungsmeldung zu dem Werkzeug (100), wobei die Meldung eine Anweisung zum Entriegeln des Werkzeugs (100) beinhaltet,
- Zählen eines Autorisierungszeitraums ab der Übertragung der Entriegelungsmeldung zu dem Werkzeug (100), wobei, wenn der gezählte Autorisierungszeitraum einen vorgegebenen Grenzwert überschreitet,
- Übertragen einer Verriegelungsmeldung, die eine Anweisung zum Verriegeln des Werkzeugs (100) beinhaltet, wodurch Verhinderung unautorisierter Benutzung des Werkzeugs (100) durch Fernentriegelung und -verriegelung ermöglicht wird, und
- der Werkzeugsteuerknoten (110) dazu eingerichtet ist, das Verfahren nach einem der Ansprüche 6 bis 8 durchzuführen.

17. Rechnerprogramm, das rechnerlesbare Codemittel umfasst, die, wenn sie in einem eines kraftgetriebenen Werkzeugs (100) und eines Werkzeugsteuerknotens (110) laufen, dazu eingerichtet sind, das Entriegeln und Verriegeln des Werkzeugs (100) zu ermöglichen und das Werkzeug (100) zu veranlassen, das entsprechende Verfahren nach einem der Ansprüche 1 bis 5 durchzuführen, und den Steuerknoten (110) zu veranlassen, das entsprechende Verfahren nach Anspruch 6 bis 8 durchzuführen.

18. Rechnerprogrammprodukt, umfassend ein rechnerlesbares Medium und ein Rechnerprogramm nach Anspruch 17, wobei das Rechnerprogramm auf dem rechnerlesbaren Medium gespeichert ist.

## Revendications

1. Procédé dans un outil électrique (100) pour permettre le déverrouillage et le verrouillage de l'outil électrique pour empêcher l'utilisation non autorisée de l'outil électrique, le procédé comprenant :
- la réception (S100) d'un message de déverrouillage à une unité de commande (210), le message comprenant une instruction de déverrouiller l'outil électrique (100),
- le déverrouillage (S110) de l'outil électrique (100) selon l'instruction par l'unité de commande (210) via une unité d'actionnement (250), permettant de la sorte d'empêcher l'utilisation non autorisée de l'outil électrique (100) par déverrouillage à distance,
- le comptage (S120) d'une période de temps d'autorisation à partir de la réception d'un premier message de déverrouillage à l'unité de commande (210) par un compteur (230),
- lorsqu'un second message de déverrouillage est reçu avant qu'un seuil prédéterminé de la période de temps d'autorisation ne soit atteint, le redémarrage du compteur (240) de sorte que l'outil électrique (100) reste déverrouillé,
- la réception d'un message de position comprenant un signal d'alerte reçu par l'unité de commande (210), le message de position comprenant une instruction de transmettre de manière répétée un signal de réponse en tant que réponse au signal d'alerte, permettant de la sorte le positionnement de l'outil (100) et,
- lorsque le seuil prédéterminé de la période de temps d'autorisation comptée est atteint ou que l'outil électrique (100) quitte une zone prédéterminée, le verrouillage (S130) de l'outil électrique (100) selon l'instruction par l'unité de commande (210) via l'unité d'actionnement (250).

2. Procédé selon la revendication 1, dans lequel :
- le message de déverrouillage comprend une première clé, dans lequel :
- la première clé est requise par l'unité de commande (210) pour l'autorisation du message de déverrouillage.

3. Procédé selon la revendication 2, dans lequel :
- une unité d'entraînement (230) requiert au moins l'une de la première clé ou d'une seconde clé de l'unité de commande (110) pour activer l'unité d'entraînement (230).

4. Procédé selon l'une quelconque des revendications 1 à 3, comprenant les étapes consistant à :
- recevoir un message de verrouillage par l'unité de commande (210), le message de verrouillage comprenant une instruction de verrouiller l'outil (100), dans lequel :
- l'outil (100) est verrouillé par l'unité de commande (210) via l'unité d'actionnement (250).

5. Procédé selon l'une quelconque des revendications 1 à 4, comprenant les étapes consistant à :
- recevoir un message d'alerte comprenant un signal d'alerte par l'unité de commande (210) ; dans lequel :
- ledit message déclenche l'unité de commande (210) pour transmettre un signal exigeant des signaux de réponse de noeuds de présence à proximité ;
- la réception de signaux de réponse à l'unité de commande (210) à partir des noeuds de présence (120:A, 120:B, 120:C) à proximité en permettant ainsi le positionnement de l'outil (100).

6. Procédé dans un noeud de commande d'outil (110) pour permettre le déverrouillage et le verrouillage d'un outil pour empêcher l'utilisation non autorisée de l'outil, le procédé comprenant :
- la transmission d'un message de déverrouillage à l'outil (100), le message de déverrouillage comprenant une instruction de déverrouiller l'outil (100),
- le comptage d'une période de temps d'autorisation à partir de la transmission du message de déverrouillage à l'outil (100),
- lorsque la fin de période de temps d'utilisation s'étend au-delà de la fin de la période de temps d'autorisation, la transmission d'un second message de déverrouillage à l'outil (100) avant que le seuil de période de temps d'autorisation prédéterminé ne soit atteint de sorte que l'outil électrique (100) reste déverrouillé,
- la transmission d'un message de position comprenant un signal d'alerte à l'outil électrique (100), permettant de la sorte le positionnement de l'outil (100),
- lorsque la période de temps d'autorisation comptée dépasse un seuil prédéterminé,
- la transmission d'un message de verrouillage comprenant une instruction de verrouiller l'outil (100), permettant de la sorte d'empêcher l'utilisation non autorisée de l'outil (100) par déverrouillage et verrouillage à distance et,
- si l'outil (100) quitte une zone prédéterminée, la transmission d'un message de verrouillage comprenant une instruction de verrouiller l'outil (100), permettant de la sorte d'empêcher l'utilisation non autorisée de l'outil (100).

7. Procédé selon la revendication 6, comprenant l'étape consistant à :
- transmettre une autorisation déléguée pour transmettre des messages de déverrouillage et de verrouillage à un outil électrique spécifié (100) comprenant l'instruction de déverrouiller l'outil (100) à un noeud de présence (120).

8. Procédé selon la revendication 7, comprenant l'étape consistant à :
- transmettre une annulation de l'autorisation déléguée au noeud de présence (120).

9. Outil électrique (100) agencé pour permettre le déverrouillage et le verrouillage dudit outil électrique (100) pour empêcher une utilisation non autorisée, l'outil électrique (100) comprenant des moyens agencés pour :
- recevoir un message à une unité de commande (210), le message comprenant une instruction de déverrouiller ou de verrouiller l'outil (100),
- verrouiller ou déverrouiller l'outil électrique (100) selon l'instruction par l'unité de commande (210) via une unité d'actionnement (250), permettant de la sorte d'empêcher l'utilisation non autorisée de l'outil électrique (100) par déverrouillage et verrouillage à distance,
- dans lequel l'unité de commande (210) est agencée pour recevoir un message de position comprenant un signal d'alerte, le message de position comprenant une instruction de transmettre de manière répétée un signal de réponse en tant que réponse au signal d'alerte, permettant de la sorte le positionnement de l'outil (100), et
- dans lequel, si l'outil (100) quitte une zone prédéterminée, l'outil (100) est à même d'être verrouillé selon l'instruction par l'unité de commande (210) via l'unité d'actionnement (250).

10. Outil électrique (100) selon la revendication 9, comprenant un compteur qui est à même de :
- compter une période de temps d'autorisation à partir de la réception du premier message à l'unité de commande (210), dans lequel,
- lorsque la période de temps d'autorisation comptée dépasse un seuil prédéterminé,
- l'outil électrique (100) est à même d'être verrouillé selon l'instruction par l'unité de commande (210) via l'unité d'actionnement (250).

11. Outil électrique (100) selon l'une quelconque des revendications 9 et 10 qui est à même :
- lorsqu'un message de déverrouillage est reçu avant que le seuil prédéterminé ne soit atteint,
- de faire en sorte de redémarrer le compteur (230) de sorte que l'outil électrique (100) reste déverrouillé.

12. Outil électrique (100) selon l'une quelconque des revendications 9 à 11, dans lequel :
- le message de déverrouillage comprend une première clé, dans lequel :
- la première clé est requise par l'unité de commande (210) pour l'autorisation du message.

13. Outil électrique (100) selon la revendication 12, dans lequel :
- une unité d'entraînement (230) est agencée pour requérir au moins l'une de la première clé ou d'une seconde clé de l'unité de commande (110) afin d'activer l'unité d'entraînement (230).

14. Outil électrique (100) selon l'une quelconque des revendications 9 à 13, dans lequel :
- l'unité de commande (210) est agencée pour recevoir un message de verrouillage comprenant une instruction de verrouiller l'outil (100), dans lequel :
- l'unité d'actionnement (250) est à même d'être verrouillée par l'unité de commande (210) via l'unité d'actionnement (250).

15. Outil électrique (100) selon l'une quelconque des revendications 9 à 14, dans lequel :
- l'unité de commande (210) est agencée pour recevoir un message d'alerte comprenant un signal d'alerte ;
- ledit message d'alerte déclenche l'unité de commande (210) pour transmettre un signal requérant des signaux de réponse de noeuds de présence à proximité ; et
- l'unité de commande (210) est agencée pour recevoir des signaux de réponse de noeuds de présence (120:A, 120:B, 120:C) à proximité en permettant de la sorte le positionnement de l'outil (100).

16. Noeud de commande d'outil (110) qui est à même de permettre le déverrouillage et le verrouillage d'un outil pour empêcher une utilisation non autorisée de l'outil (100), le noeud (110) comprenant des moyens qui sont à même :
- de transmettre un message de déverrouillage à l'outil (100), le message comprenant une instruction de déverrouiller l'outil (100),
- de compter une période de temps d'autorisation à partir de la transmission du message de déverrouillage à l'outil (100), dans lequel, lorsque la période de temps d'autorisation comptée dépasse un seuil prédéterminé,
- la transmission d'un message de verrouillage comprend une instruction de verrouiller l'outil (100), permettant en sorte d'empêcher l'utilisation non autorisée de l'outil (100) par déverrouillage et verrouillage à distance et
- le noeud de commande d'outil (110) est à même d'effectuer le procédé selon l'une quelconque des revendication 6 à 8.

17. Programme informatique, comprenant des moyens de codage lisibles par ordinateur, qui, lorsqu'ils tournent dans l'un quelconque d'un outil électrique (100) et d'un noeud de commande d'outil (110), sont à même de permettre le déverrouillage et le verrouillage de l'outil (100) et d'amener l'outil (100) à effectuer le procédé correspondant selon l'une quelconque des revendications 1 à 5 et le noeud de commande (110) à effectuer le procédé correspondant selon les revendications 6 à 8.

18. Produit de programmation informatique, comprenant un support lisible par ordinateur et un programme d'ordinateur selon la revendication 17, dans lequel le programme informatique est stocké sur le support lisible par ordinateur.
